# EUROPÄISCHE PATENTSCHRIFT

(11) **EP 3 100 640 B1**
(45) Veröffentlichungstag und Bekanntmachung des Hinweises auf die Patenterteilung: **14.11.2018**
(21) Anmeldenummer: 16172011.5
(22) Anmeldetag: 30.05.2016
(51) Int. Cl.: A47B 77/02, A47J 37/07

(54) **KÜCHENMÖBEL**
KITCHEN CABINET
MEUBLE DE CUISINE

(30) Priorität: 05.06.2015 AT 504632015
(43) Veröffentlichungstag der Anmeldung: 07.12.2016
(73) Patentinhaber: Steininger, Martin, 4113 St. Martin im Mühlkreis (AT)
(72) Erfinder: Steininger, Martin, 4113 St. Martin/Mühlkreis (AT)
(74) Vertreter: KLIMENT & HENHAPEL

(56) Entgegenhaltungen:
- DE-U1- 8 705 757
- US-A1- 2004 118 326
- US-A1- 2004 154 608
- US-A1- 2007 215 016
- US-A1- 2013 305 762

## Beschreibung

### GEBIET DER ERFINDUNG

Die Erfindung betrifft einen Küchenblock zur Verwendung im Freien, umfassend einen Grundkörper für die Aufnahme von Küchengerätschaften und eine Abdeckung für den Grundkörper, die von einer im wesentlichen horizontalen Schließlage, in welcher sie den Grundkörper abdeckt, in eine Öffnungslage, in der sie eine Deckfläche des Grundkörpers größtenteils freigibt, bewegbar ist, wobei die Abdeckung am Grundkörper über zumindest einen Beschlag befestigt ist, mit dem die Abdeckung von ihrer im wesentlichen horizontalen Schließlage in annähernd horizontaler Lage verbleibend in ihre im wesentlichen horizontale Öffnungslage bewegbar ist, in der die Abdeckung seitlich versetzt zu ihrer Schließlage angeordnet ist, wodurch die im Grundkörper angeordneten und ansonsten von der Abdeckung in ihrer Schließlage verdeckten Küchengerätschaften für einen Benutzer zugänglich sind. Eine gattungsgemäße Ausführung ist in der US 2004/0154608 A1 beschrieben.

### STAND DER TECHNIK

Küchenblöcke bestehen für gewöhnlich aus einem Grundkörper, in welchem Küchengerätschaften, wie beispielsweise Herde, Grillgeräte, Abwaschbecken samt Armaturen oder Arbeitsflächen, angeordnet sind. Manche dieser Küchenblöcke sind zusätzlich mit Abdeckungen versehen, um sensible Teile des Grundkörpers vor Verschmutzung zu schützen, wenn der Küchenblock gerade nicht in Verwendung ist.

Solche Abdeckungen sind üblicherweise mittels Scharniere oder sonstiger Gelenkverbindungen mit dem Grundkörper verbunden und werden vor Inbetriebnahme der Küchengerätschaften aus ihrer Schließlage in eine vertikale Öffnungslage hochgeklappt. Sobald sich solche Abdeckungen in ihrer Öffnungslage befinden, geben sie die Scharniere völlig frei, sodass sie nicht nur sichtbar sind, sondern auch Verschmutzungen oder möglichen Beschädigungen ausgesetzt sind. Insbesondere für eine Verwendung im Freien sind solche Küchenblöcke nicht geeignet, da die beweglichen Teile der Gelenkverbindungen durch Witterungseinflüsse verschmutzen oder verrosten würden und mit der Zeit funktionsunfähig werden würden.

Zudem überragen Armaturenteile und dergleichen mitunter die Deckfläche des Küchenblocks. Es ist in der Praxis durchaus problematisch auch diese Armaturenteile abzudecken, da bei Verwendung einer klappbaren Abdeckung eine entsprechende Tiefe der Abdeckung erforderlich ist. Dadurch steigt das Gesamtgewicht der Abdeckung und der Bedienungskomfort wird beeinträchtigt. Zudem sind raumgreifende Bewegungen der Abdeckung erforderlich, die nicht nur entsprechenden Kraftaufwand bedingen, sondern auch eine Verletzungsgefahr darstellen können, wenn die Abdeckung ungewollt in die Schließlage zurückfällt. Insbesondere für eine Verwendung im Außenbereich müssen aber jedenfalls auch Armaturenteile des Küchenblocks von der Abdeckung geschützt werden. Weitere Ausführungen werden in der US 2013/0305762 A1, US 2007/0215016 A1, DE 87 05 757 U1 und der US 2004/0118326 A1 beschrieben.

### AUFGABE DER ERFINDUNG

Daher ist es eine Aufgabe der gegenständlichen Erfindung einen Küchenblock mit Abdeckung bereitzustellen, welcher sich einerseits durch hohen Bedienkomfort und Betriebssicherheit auszeichnet - insbesondere dann, wenn sich die Abdeckung in ihrer Öffnungslage befindet - und andererseits verlässlichen Schutz vor Verschmutzung und Witterungseinflüssen sowohl der Küchengerätschaften und Armaturenteile des Küchenblocks, als auch der Verbindungsmechanik zwischen Grundkörper und Abdeckung bieten soll, wobei auch von der Deckfläche abstehende Armaturen verwendbar sein sollen.

### DARSTELLUNG DER ERFINDUNG

Diese Aufgabe wird bei einem eingangs erwähnten Küchenblock zur Verwendung im Freien, umfassend einen Grundkörper und eine Abdeckung für den Grundkörper, die von einer im wesentlichen horizontalen Schließlage, in welcher sie den Grundkörper abdeckt, in eine Öffnungslage, in welcher sie eine Deckfläche des Grundkörpers größtenteils freigibt, bewegbar ist, wobei die Abdeckung am Grundkörper über zumindest einen Beschlag befestigt ist, mit dem die Abdeckung von ihrer im wesentlichen horizontalen Schließlage in annähernd horizontaler Lage verbleibend in ihre im wesentlichen horizontale Öffnungslage bewegbar ist, in der die Abdeckung seitlich versetzt zu ihrer Schließlage angeordnet ist, wodurch die im Grundkörper angeordneten und ansonsten von der Abdeckung in ihrer Schließlage verdeckten Küchengerätschaften für einen Benutzer zugänglich sind, dadurch gelöst, dass die oberhalb des Grundkörpers befindlichen Beschlagsteile des Beschlages in jeder Position der Abdeckung von der Abdeckung überdeckt werden und die oberhalb des Grundkörpers befindlichen Beschlagsteile des Beschlages auch in der Öffnungslage keine sichtbaren Teile bieten, wobei es sich bei dem Beschlag um einen Schwenkbeschlag handelt, der zumindest zwei Parallelogrammlenker umfasst, die an ihren ersten Enden am Grundkörper angelenkt sind, und an ihren zweiten Enden an der Abdeckung angelenkt sind, und die Parallelogrammlenker an ihren ersten Enden mittels eines ersten Beschlagsteiles angelenkt sind, der an einer Innenseite des Grundkörpers befestigt ist, und an ihren zweiten Enden mittels eines zweiten Beschlagsteiles angelenkt sind, der an einer dem Grundkörper zugewandten Innenseite der Abdeckung befestigt ist.

Wie auch bei bekannten Ausführungen üblich ist die Deckfläche des Grundkörpers in der Schließlage der Abdeckung abgedeckt. Allerdings verbleibt die Abdeckung während ihrer Bewegung in die Öffnungslage in annähernd horizontaler Lage, sodass raumgreifende Bewegungen vermieden werden können und der Kraftaufwand verringert werden kann. Der Bedienkomfort wird dadurch erhöht. Zudem bietet sich der Vorteil, dass erfindungsgemäß die oberhalb des Grundkörpers befindlichen Beschlagsteile des Beschlages stets abgedeckt bleiben, sodass sich auch in der Öffnungslage keine sichtbaren oder frei liegenden Teile bieten. Dadurch wird nicht nur ein optisch ansprechendes Design ermöglicht, sondern die beweglichen Beschlagsteile auch gegen Verschmutzung und Witterungseiflüssen geschützt.

Da die Abdeckung in der Öffnungslage horizontal versetzt zu ihrer Schließlage angeordnet ist und nicht etwa vertikal absteht, kann sie auch nicht ohne weiteres aus ihrer Öffnungslage in die Schließlage zurückfallen. Somit wird auch die Betriebssicherheit des erfindungsgemäßen Küchenblocks erhöht. Zudem stellt die Abdeckung in ihrer Öffnungslage aufgrund ihrer horizontalen Positionierung eine zusätzliche Nutzfläche bereit, die als Arbeitsfläche oder als Essbereich für Gäste genutzt werden kann, insbesondere bei Verwendung mehrerer nebeneinander angeordneter Küchenblöcke.

Erfindungsgemäß ist ferner vorgesehen, dass der Beschlag als Schwenkbeschlag ausgeführt ist, der zumindest zwei Parallelogrammlenker umfasst, die an ihren ersten Enden am Grundkörper angelenkt sind, und an ihren zweiten Enden an der Abdeckung angelenkt sind. Dadurch ist gewährleistet, dass die Abdeckung unabhängig von ihrer momentanen Position stets in ihrer horizontalen Lage gehalten wird. Außerdem sind Grundkörper und Abdeckung dadurch in stabiler, platzsparender und sicherer Weise miteinander verbunden. Gerade bei Ausführungsvärianten, bei denen die Abdeckung aus einem Material mit hohem spezifischem Gewicht wie z.B. Naturstein gefertigt ist, bietet das Vorhandensein von mehreren Parallelogrammlenkern zusätzliche Absicherung. Bei den oberhalb des Grundkörpers befindlichen Beschlagsteilen des Beschlages handelt es sich bei dieser Ausführungsform somit im Wesentlichen um die beiden Parallelogrammlenker.

Des Weiteren ist erfindungsgemäß vorgesehen, dass die Parallelogrammlenker an ihren ersten Enden mittels eines ersten Beschlagsteiles angelenkt sind, der an einer Innenseite des Grundkörpers befestigt ist, und an ihren zweiten Enden mittels eines zweiten Beschlagsteiles angelenkt sind, der an einer dem Grundkörper zugewandten Innenseite der Abdeckung befestigt ist. Durch die Anlenkung der Parallelogrammlenker an den Innenseiten des Küchenblocks sind sowohl die Parallelogrammlenker selbst, als auch die entsprechenden Beschlagsteile vor Verschmutzung und Verwitterung geschützt.

Bei einer bevorzugten Ausführungsform des erfindungsgemäßen Küchenblocks ist vorgesehen, dass einer der Parallelogrammlenker an seinem dem Grundkörper zugeordneten, ersten Ende eine Verlängerung in die seinem zweiten Ende abgewandte Richtung aufweist, an der ein Federelement befestigt ist, das in der Schließlage und der Öffnungslage der Abdeckung gespannt wird. Das Federelement liegt somit innerhalb des Grundkörpers. Durch die Verlängerung wird der betreffende Parallelogrammlenker als zweiarmiger Hebel ausgeführt, wobei die Verlängerung des Parallelogrammlenkers den Kraftarm des Hebels bildet. Das an der Verlängerung befestigte Federelement übt nun sowohl in der Schließlage als auch in der Öffnungslage der Abdeckung aufgrund ihres gespannten Zustandes eine rückstellende Kraft auf den als Hebel ausgeführten Parallelogrammlenker und somit die Abdeckung aus. Idealerweise unterschreitet das Produkt dieser rückstellenden Kraft mit dem Kraftarm das für das Anheben der Abdeckung erforderliche Drehmoment nur geringfügig, sodass lediglich eine geringe manuelle Kraftanstrengung erforderlich ist, um die Abdeckung aus ihrer Schließ- oder Öffnungslage gegen ihr Eigengewicht auszulenken und zu verschwenken. Das Spannen des Federelements wird wiederum durch das Eigengewicht der Abdeckung unterstützt. Das Federelement kann als Zug- oder Druckfeder ausgeführt sein, des Weiteren könnten auch mehrere Federelemente vorgesehen sein, die in ihrem Zusammenwirken das Bewegen der Abdeckung erleichtern.

Bei einer weiteren bevorzugten Ausführungsform des erfindungsgemäßen Küchenblocks ist vorgesehen, dass die Abdeckung haubenförmig ausgebildet ist, um im Inneren der Abdeckung in ihrer Schießlage einen ausreichenden Aufnahmeraum für von der Deckfläche abstehende Armaturen und dergleichen zu schaffen. Dabei ist der Aufnahmeraum auf die Armaturen jeweils so abgestimmt, dass sie die Schwenkbewegung der Abdeckung nicht behindern.

### KURZE BESCHREIBUNG DER FIGUREN

Die Erfindung wird nun anhand eines Ausführungsbeispiels näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: drei nebeneinander angeordnete erfindungsgemäße Küchenblöcke, wobei sich die Abdeckungen jeweils in der Öffnungslage befinden,
- Fig. 2: die drei Küchenblöcke aus Fig. 1, wobei sich die Abdeckungen nun in der Schließlage befinden,
- Fig. 3: eine Ansicht eines der Küchenblöcke aus Fig. 1 gemäß der Ansicht 1,
- Fig. 4: eine Ansicht eines der Küchenblöcke aus Fig. 2 gemäß der Ansicht 2, wobei die Abdeckung zusätzlich in der Öffnungslage angedeutet ist,
- Fig. 5: eine Detailansicht aus Fig. 4 gemäß der Ansicht 4,
- Fig. 6: eine Detailansicht aus Fig. 3 gemäß der Ansicht 3, wobei die Abdeckung zusätzlich in der Schließlage angedeutet ist, und die
- Fig. 7: eine Detailansicht aus Fig. 3 gemäß der Ansicht 5.

### WEGE ZUR AUSFÜHRUNG DER ERFINDUNG

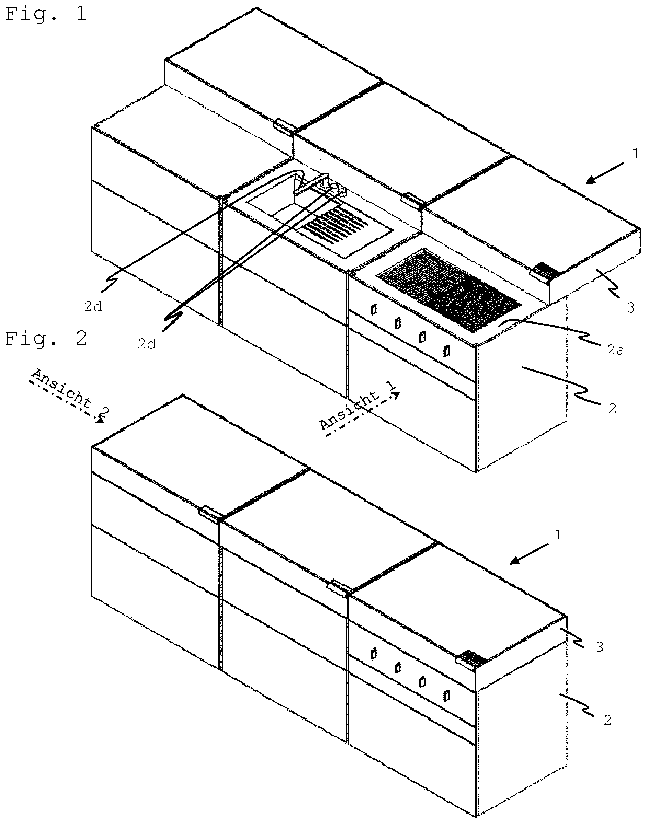

Fig. 1 zeigt drei erfindungsgemäße Küchenblöcke 1, wie sie in der Praxis angeordnet sein können. Jeder dieser Küchenblöcke 1 umfasst einen Grundkörper 2 und eine Abdeckung 3 für diesen Grundkörper 2. Die Abdeckungen 3 befinden sich jeweils in einer Öffnungslage und schließen, so wie auch die Grundkörper 2 selbst, direkt aneinander an. Dabei entsteht einerseits eine Küchenzeile, welche von den drei Grundkörpern 2 gebildet wird und im gezeigten Ausführungsbeispiel einen Grillherd, eine Abwasch sowie eine Arbeitsfläche umfassen. Andererseits ergeben die drei nebeneinander angeordneten Abdeckungen 3 eine zusätzliche Nutzfläche, welche als Arbeitsfläche oder als Ess- bzw. Barbereich dienen kann.

In ihrer Öffnungslage gibt die Abdeckung 3 eine Deckfläche 2a des Grundkörpers 2 größtenteils frei, wodurch die im Grundkörper 2 angeordneten und ansonsten von der Abdeckung 3 in ihrer Schließlage verdeckten Küchengerätschaften (im gezeigten Ausführungsbeispiel beispielsweise Armaturen 2d) für einen Benutzer zugänglich sind.

Fig. 2 zeigt dieselbe Küchenzeile, die auch in Fig. 1 dargestellt ist, wobei sich die Abdeckungen 3 nun in ihrer Schließlage befinden. Dadurch sind die Deckflächen 2a der Grundkörper 2 - und damit auch die in den Grundkörpern 2 angeordneten Küchengerätschaften - abgedeckt.

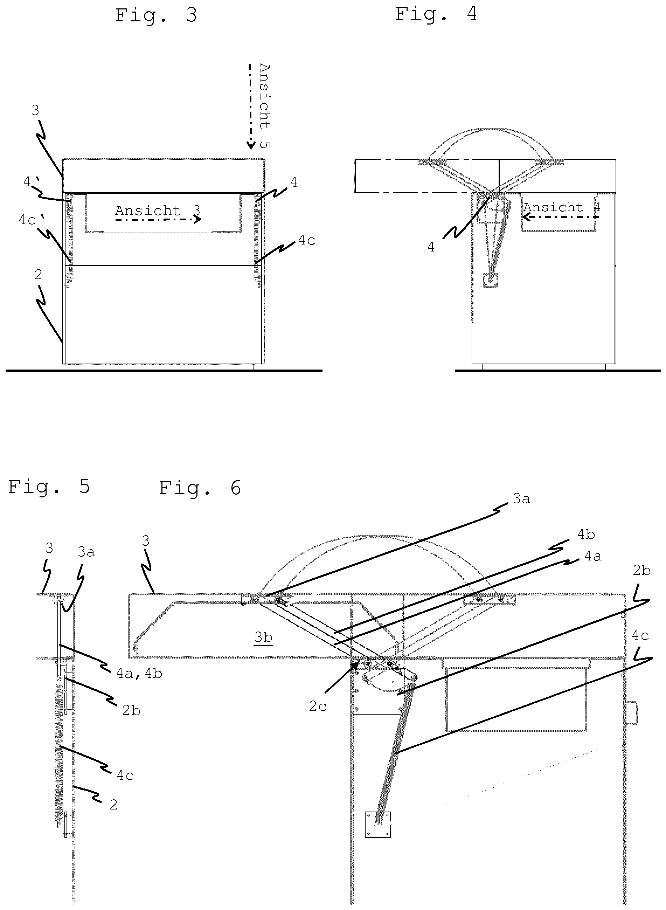

Fig. 3 zeigt eine Schnittansicht des Küchenblockes 1 aus Fig. 1 gemäß Ansicht 1. Dabei eröffnet sich dem Betrachter ein Blick in das Innere des Grundkörpers 2, wobei an zwei einander gegenüberliegenden Innenwänden des Grundkörpers 2 jeweils ein Schwenkbeschlag 4 angebracht ist. Die Abdeckung 3 befindet sich in ihrer Öffnungslage und ist somit hinter der Schnittebene der Ansicht angeordnet, weshalb diejenigen Teile des Schwenkbeschlags 4, welche sich innerhalb der Abdeckung 3 befinden, nicht sichtbar sind.

Fig. 4 zeigt eine Schnittansicht des Küchenblockes 1 aus Fig. 2 gemäß Ansicht 2. Der Darstellung in Fig. 2 entsprechend ist die Abdeckung 3 in ihrer Schließlage dargestellt. Zur besseren Veranschaulichung der Schwenkbewegung ist die Abdeckung 3 jedoch zusätzlich in ihrer Öffnungslage strichliert angedeutet. Aus dieser Darstellung geht der Umstand klar hervor, dass sich die Abdeckung 3 sowohl in der Schließ- als auch in der Öffnungslage in einer annähernd horizontalen Lage parallel zu der Deckfläche 2a des Grundkörpers 2 befindet. Zu sehen ist außerdem der Schwenkbeschlag 4, über welchen die Abdeckung 3 am Grundkörper 2 befestigt ist und mithilfe dessen die Abdeckung 3 aus der Schließ- in die Öffnungslage verschwenkbar ist.

Fig. 5 zeigt eine Detailansicht des Schwenkbeschlags 4 gemäß Ansicht 4. Zu sehen sind dabei ein erster Parallelogrammlenker 4a und ein zweiter Parallelogrammlenker 4b, ein Federelement 4c, welches einerseits am zweiten Parallelogrammlenker 4b befestigt ist und andererseits mit dem Grundkörper 2 verbunden ist, sowie ein erster Beschlagsteil 2b, der dem Grundkörper 2 zugeordnet ist, und ein zweiter Beschlagsteil 3a, der der Abdeckung 3 zugeordnet ist, mittels welcher die Parallelogrammlenker 4a, 4b angelenkt sind. Das Federelement 4c kann als Zug- oder Druckfeder ausgeführt sein. Es wäre alternativ auch denkbar, statt des Federelements 4c ein Gegengewicht zu verwenden, das das Bewegen der Abdeckung 3 unterstützt und erleichtert.

Die Fig. 6 zeigt zur deutlicheren Veranschaulichung eine weitere Detailansicht des Schwenkbeschlags 4 gemäß Ansicht 3. Die beiden Parallelogrammlenker 4a, 4b sind an ihren ersten Enden mittels eines ersten Beschlagsteiles 2b an der Innenseite des Grundkörpers 2 angelenkt und an ihren zweiten Enden mittels eines zweiten Beschlagsteiles 3a an einer Innenseite der Abdeckung 3 angelenkt. Durch diese Anlenkung der Parallelogrammlenker 4a, 4b befindet sich die Abdeckung 3 stets in annähernd horizontaler Lage, welche sie auch in der Schließ- bzw. Öffnungslage einnimmt. Das Federelement 4c ist an einer Verlängerung des zweiten Parallelogrammlenkers 4b befestigt und ist sowohl in der Schließlage als auch in der Öffnungslage der Abdeckung 3 gespannt. Die Parallelogrammlenker 4a, 4b ragen durch eine Öffnung 2c in der Deckfläche 2a des Grundkörpers 2 hindurch. Die Abdeckung 3 weist einen Aufnahmeraum 3b auf, um gegebenenfalls Armaturen 2d des Grundkörpers 2 darin aufzunehmen.

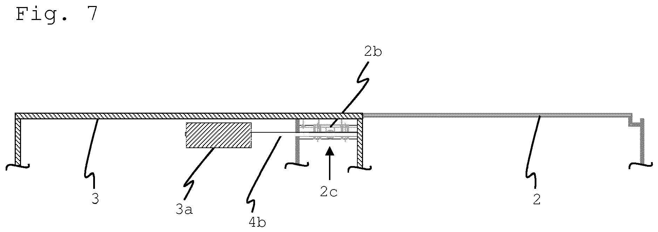

Fig. 7 zeigt schließlich eine letzte Detailansicht von oben gesehen, bei der eine horizontale Schnittebene durch den zweiten Beschlagsteil 3a verläuft. Somit ist der zweite Parallelogrammlenker 4b sichtbar, wobei dieser mittels des ersten Beschlagsteiles 2b an dem Grundkörper 2 angelenkt ist und durch die Öffnung 2c hindurch in Richtung des zweiten Beschlagsteiles 3a ragt. Diese Öffnung 2c ist sowohl in der Schließlage als auch in der Öffnungslage von der Abdeckung 3 verdeckt.

### FUNKTIONSWEISE DER ERFINDUNG

Zunächst befindet sich die Abdeckung 3 in ihrer Schließlage, in welcher sie die Deckfläche 2a des Grundkörpers 2 vollständig abdeckt (vgl. Fig. 2). Somit sind sowohl Küchengerätschaften, die in dem Küchenblock 1 angeordnet sein können, als auch alle Bestandteile des Schwenkbeschlags 4 völlig verdeckt.

Um die Abdeckung 3 nun aus ihrer Schließlage in die Öffnungslage zu bewegen, reicht es aus, wenn der Benutzer eine geringe manuelle Kraft auf die Abdeckung 3 ausübt, um diese zunächst aus ihrer Schließlage gegen ihr Eigengewicht auszulenken und sie in weiterer Folge in Richtung Öffnungslage zu verschwenken. Das Auslenken der Abdeckung 3 gegen ihr Eigengewicht wird dabei durch das gespannte Federelement 4c unterstützt, welches über den zweiten Parallelogrammlenker 4b eine rückstellende Kraft auf die Abdeckung 3 in der Schließlage ausübt (vgl. Fig. 6).

Während des Verschwenkens der Abdeckung 3 aus der Schließ- in Richtung Öffnungslage verringert sich die Spannung des Federelementes 4c und damit die rückstellende Kraft, welche auf die Abdeckung 3 wirkt, stetig und erreicht bei Vertikalstellung des zweiten Parallelogrammlenkers 4b ihr Minimum. Wird nun der Schwenkvorgang in Richtung Öffnungslage weiter fortgesetzt, so beginnt sich das Federelement 4c durch das Eigengewicht der Abdeckung 3 wiederum zu spannen und das rückstellende Moment auf die Abdeckung 3 nimmt solange zu, bis sich die Abdeckung 3 in der Öffnungslage befindet. Folglich wird das Absetzen der Abdeckung 3 aufgrund des Rückstellmoments, die das Federelement 4c auf die Abdeckung 3 ausübt, abgedämpft.

In der Öffnungslage verdeckt die Abdeckung 3 die Deckfläche 2a des Grundkörpers 2 nur noch zu einem kleinen Teil (vgl. Fig. 2 und 7). Während derjenige Abschnitt der Deckfläche 2a, in dem Küchengerätschaften angeordnet sein können, völlig freigegeben ist, ist nun nur noch jener Abschnitt der Deckfläche 2a verdeckt, welcher die Öffnung 2c aufweist. Somit sind auch in der Öffnungslage der Abdeckung 3 keine von außen sichtbaren oder frei liegenden Bestandteile des Schwenkbeschlages 4 vorhanden.

Sinngemäß gilt das oben Gesagte auch für das Verschwenken der Abdeckung 3 aus der Öffnungslage zurück in ihre Schließlage.

Mithilfe der gegenständlichen Erfindung wird somit ein abdeckbarer Küchenblock 1 bereitgestellt, welcher sich einerseits durch hohen Bedienkomfort und Betriebssicherheit auszeichnet - insbesondere dann, wenn sich die Abdeckung 3 in ihrer Öffnungslage befindet - und andererseits verlässlichen Schutz vor Verschmutzung und Witterungseinflüssen sowohl der Küchengerätschaften und Armaturenteile des Küchenblocks 1, als auch der Verbindungsmechanik zwischen Grundkörper 2 und Abdeckung 3 bietet, wobei auch von der Deckfläche 2a abstehende Armaturen 2d verwendbar sind.

### BEZUGSZEICHENLISTE

- 1: Küchenblock
- 2: Grundkörper
- 2a: Deckfläche
- 2b: erster Beschlagsteil
- 2c: Öffnung
- 2d: Armaturen
- 3: Abdeckung
- 3a: zweiter Beschlagsteil
- 3b: Aufnahmeraum
- 4: Schwenkbeschlag
- 4a: erster Parallelogrammlenker
- 4b: zweiter Parallelogrammlenker
- 4c: Federelement

## Patentansprüche

1. Küchenblock zur Verwendung im Freien, umfassend einen Grundkörper (2) für die Aufnahme von Küchengerätschaften und eine Abdeckung (3) für den Grundkörper (2), die von einer im wesentlichen horizontalen Schließlage, in welcher sie den Grundkörper (2) abdeckt, in eine Öffnungslage, in der sie eine Deckfläche (2a) des Grundkörpers (2) größtenteils freigibt, bewegbar ist, wobei die Abdeckung (3) am Grundkörper (2) über zumindest einen Beschlag befestigt ist, mit dem die Abdeckung (3) von ihrer im wesentlichen horizontalen Schließlage in annähernd horizontaler Lage verbleibend in ihre im wesentlichen horizontale Öffnungslage bewegbar ist, in der die Abdeckung (3) seitlich versetzt zu ihrer Schließlage angeordnet ist, wodurch die im Grundkörper (2) angeordneten und ansonsten von der Abdeckung (3) in ihrer Schließlage verdeckten Küchengerätschaften für einen Benutzer zugänglich sind, **dadurch gekennzeichnet, dass** die oberhalb des Grundkörpers (2) befindlichen Beschlagsteile des Beschlages in jeder Position der Abdeckung (3) von der Abdeckung (3) überdeckt werden und die oberhalb des Grundkörpers (2) befindlichen Beschlagsteile des Beschlages auch in der Öffnungslage keine sichtbaren Teile bieten, wobei es sich bei dem Beschlag um einen Schwenkbeschlag (4) handelt, der zumindest zwei Parallelogrammlenker (4a, 4b) umfasst, die an ihren ersten Enden am Grundkörper (2) angelenkt sind, und an ihren zweiten Enden an der Abdeckung (3) angelenkt sind, und die Parallelogrammlenker (4a, 4b) an ihren ersten Enden mittels eines ersten Beschlagsteiles (2b) angelenkt sind, der an einer Innenseite des Grundkörpers (2) befestigt ist, und an ihren zweiten Enden mittels eines zweiten Beschlagsteiles (3a) angelenkt sind, der an einer dem Grundkörper (2) zugewandten Innenseite der Abdeckung (3) befestigt ist.

2. Küchenblock nach Anspruch 1, **dadurch gekennzeichnet, dass** einer der Parallelogrammlenker (4b) an seinem dem Grundkörper (2) zugeordneten, ersten Ende eine Verlängerung in die seinem zweiten Ende abgewandte Richtung aufweist, an der ein Federelement (4c) befestigt ist, das in der Schließlage und der Öffnungslage der Abdeckung (3) gespannt ist.

3. Küchenblock nach einem der Ansprüche 1 bis 2, **dadurch gekennzeichnet, dass** die Abdeckung (3) haubenförmig ausgebildet ist.

## Claims

1. Kitchen block for outdoor use, comprising a base body (2) for receiving kitchen appliances and a cover (3) for the base body (2) which is movable from a substantially horizontal closed position in which it covers the base body (2) into an opening position in which it largely releases a cover surface (2a) of the base body (2), wherein the cover (3) is fastened to the base body (2) via at least one fitting, with which the cover (3) can be moved from its substantially horizontal closed position, remaining in an approximately horizontal position, into its substantially horizontal open position, in which the cover (3) is arranged laterally offset from its closed position, whereby the kitchen appliances arranged in the base body (2) and otherwise concealed by the cover (3) in its closed position are accessible to a user, **characterized in that** the fitting parts of the fitting located above the base body (2) are covered by the cover (3) in every position of the cover (3) and the fitting parts of the fitting located above the base body (2) also offer no visible parts in the open position, wherein the fitting concerns a pivot fitting (4), which comprises at least two parallelogram guide rods (4a, 4b) which are articulated at their first ends on the base body (2) and are articulated at their second ends on the cover (3), and the parallelogram guide rods (4a, 4b) are articulated at their first ends by means of a first fitting part (2b) which is fastened to an inside of the base body (2) and are articulated at their second ends by means of a second fitting part (3a) which is fastened to an inside of the cover (3) facing the base body (2).

2. Kitchen block according to claim 1, **characterized in that** one of the parallelogram guide rods (4b) has at its first end associated with the base body (2) an extension in the direction facing away from its second end, on which a spring element (4c) is fastened, which is tensioned in the closed position and the open position of the cover (3).

3. Kitchen block according to one of claims 1 to 2, **characterized in that** the cover (3) is designed in the form of a hood.

## Revendications

1. Bloc de cuisine pour utilisation en plein air, comprenant un corps de base (2) destiné à recevoir des appareils de cuisine et un couvercle (3) pour le corps de base (2), qui peut être déplacé d'une position fermée sensiblement horizontale, dans laquelle il couvre le corps de base (2), à une position ouverte dans laquelle il dégage en majeure partie une surface supérieure (2a) du corps de base (2), le couvercle (3) étant fixé sur le corps de base (2) par au moins une ferrure avec laquelle le couvercle (3) peut être déplacé de sa position fermée sensiblement horizontale à sa position ouverte sensiblement horizontale en restant dans une position approximativement horizontale, dans laquelle le couvercle (3) est décalé latéralement par rapport à sa position fermée, de sorte que les appareils de cuisine disposés dans le corps de base (2) et couverts le reste du temps par le couvercle (3) dans sa position fermée sont accessibles à un utilisateur, **caractérisé en ce que** les parties de la ferrure qui se trouvent au-dessus du corps de base (2) sont couvertes par le couvercle (3) dans chaque position du couvercle (3) et les parties de la ferrure qui se trouvent au-dessus du corps de base (2) ne présentent pas de parties visibles même dans la position ouverte, la ferrure étant une ferrure pivotante (4) qui comprend aux moins deux bielles de parallélogramme (4a, 4b) articulées à leur première extrémité sur le corps de base (2) et à leur deuxième extrémité sur le couvercle (3), et les bielles de parallélogramme (4a, 4b) étant articulées à leur première extrémité au moyen d'une première partie de ferrure (2b) qui est fixée sur une face intérieure du corps de base (2) et à leur deuxième extrémité au moyen d'une deuxième partie de ferrure (3a) qui est fixée sur une face intérieure du couvercle (3) tournée vers le corps de base (2).

2. Bloc de cuisine selon la revendication 1, **caractérisé en ce que** l'une des bielles de parallélogramme (4b) présente sur sa première extrémité associée au corps de base (2) un prolongement dans la direction opposée à sa deuxième extrémité, sur lequel est fixé un élément de ressort (4c) qui est tendu dans la position fermée et la position ouverte du couvercle (3).

3. Bloc de cuisine selon l'une des revendications 1 à 2, **caractérisé en ce que** le couvercle (3) est construit en forme de hotte.
